(19) Europäisches Patentamt
European Patent Office
Office européen des brevets

(11) Veröffentlichungsnummer: **0 248 336**
**A2**

# (12) EUROPÄISCHE PATENTANMELDUNG

(21) Anmeldenummer: **87107659.2**

(22) Anmeldetag: **26.05.87**

(51) Int. Cl.[4]: **C08G 18/10**, C08G 18/42, C08G 18/58, C09D 5/03

(30) Priorität: **31.05.86 DE 3618355**

(43) Veröffentlichungstag der Anmeldung: **09.12.87 Patentblatt 87/50**

(84) Benannte Vertragsstaaten: **AT BE DE FR GB IT NL SE**

(71) Anmelder: **HOECHST AKTIENGESELLSCHAFT**
**Postfach 80 03 20**
**D-6230 Frankfurt am Main 80(DE)**

(72) Erfinder: **Kiessling, Hans-Joachim, Dr.**
**Eppenhainer Weg 20a**
**D-6239 Eppstein/Taunus(DE)**

## (54) Vernetzende Bindemittel für Pulverlacke und ihre Verwendung.

(57) Bindemittel für Pulverlacke auf Basis von Carboxylgruppen tragenden Verbindungen mit Säurezahlen im Bereich von 15 bis 150 mg KOH/g, 1,2-Epoxidverbindungen mit mindestens zwei 1,2-Epoxidgruppen pro Molekül und einem Aufschmelzpunkt von über 40°C, mit Epoxidäquivalentgewichten im Bereich von 600 bis 1200, hydroxylgruppenreaktiven Verbindungen mit einer Funktionalität ≥2, und üblichen Zusatzmitteln. Verwendet werden die Bindemittel zusammen mit weiteren üblichen Zusätzen als Pulverlack zur Herstellung von lösungsmittelbeständigen Beschichtungen, insbesondere zur Herstellung von matten Überzügen.

EP 0 248 336 A2

## Vernetzende Bindemittel für Pulverlacke und ihre Verwendung

Bindemittel für Pulverlacke aus Carboxylgruppen tragenden Polyestern und Epoxygruppen enthaltenden Verbindungen sind bekannt. Letztere sind in den meisten Fällen Epoxidharze, jedoch finden auch Verbindungen wie Triglycidylisocyanurat Verwendung.

In der US-PS 4.480.008 werden feste Bindemittel aus Carboxylgruppen tragenden Polyestern, Epoxidharzen und einem carboxylgruppenhaltigen Polyurethanpräpolymer, gebildet durch Reaktion von Polyisocyanaten, Hydroxycarbonsäuren und Verkappungsmitteln, beschrieben, die bei der Herstellung von Pulverlacken verwendet werden. Die Herstellung dieser Polyurethanpräpolymeren bedeutet - durch den Einsatz der relativ teuren Hydroxycarbonsäuren - aber einen zusätzlichen und teuren Verfahrensschritt.

Die Überzüge auf Basis solcher Bindemittel befriedigt außerdem nicht immer die Anforderung in Bezug auf Lösungsmittelbeständigkeit.

Die DE-Offenlegungsschrift 32 32 463 betrifft Bindemittel für Pulverlacke, die zu matten Überzügen führen, wobei diese Bindemittel aus OH-Gruppen enthaltenen Polymeren, zu denen auch hydroxylgruppenhaltige Polyester zu zählen sind, Polyepoxiden und Carboxylgruppen enthaltenen, blockierten Polyisocyanaten bestehen. Nachteilig ist dabei u. a., daß auch hier spezielle, d. h. teure Polyisocyanate eingesetzt werden müssen, die gleichfalls durch Reaktion von Isocyanaten, Hydroxycarbonsäuren und Verkappungsmitteln hergestellt werden.

Die Erfindung betrifft nun Bindemittel für Pulverlacke auf Basis von

I. 40 bis 80, vorzugsweise 55 bis 70 Gew.-%, Carboxylgruppentragenden Verbindungen, vorzugsweise Polyestern mit Säurezahlen im Bereich von 15 bis 150, vorzugsweise 30 bis 70 mgKOH/g,

II. 15 bis 40, vorzugsweise 20 bis 30 Gew.-%, 1,2-Epoxidverbindungen mit mindestens zwei 1,2-Epoxidgruppen pro Molekül und einem Aufschmelzpunkt von über 40°C, bevorzugt Epoxidharze auf Basis von Polyphenolen und Epichlorhydrin mit Epoxidäquivalentgewichten im Bereich von 600 bis 1200, vorzugsweise 700 bis 900,

III. 5 bis 30, vorzugsweise 8 bis 25 Gew.-%, hydroxylgruppenreaktiven Verbindungen mit einer Funktionalität $\geq 2$ - ausgenommen carboxylgruppenhaltige Polyurethanpräpolymere, gebildet durch Reaktion von Polyisocyanaten, Hydroxycarbonsäuren und Verkappungsmitteln - und gegebenenfalls

IV. üblichen Zusatzmitteln, wobei die Summe der Komponenten I. bis III. stets 100 % ergibt.

In der erfindungsgemäßen Bindemittel-Komposition werden als Komponente I bevorzugt Polyester mit Endgruppen eingesetzt, die zu über 70 %, vorzugsweise zu über 90 Gew.-%, aus Carboxylgruppen bestehen, wobei die Kettenenden überwiegend durchschnittlich 2 und mehr Carboxylgruppen, teilweise als Carbonsäureanhydridgruppen vorliegend, aufweisen.

Die Herstellung der Komponente I gelingt z.B. durch die Reaktion von geeigneten Hydroxylgruppen tragenden Verbindungen mit Trimellithsäureanhydrid (= TMSA), wobei das Verhältnis Hydroxyl zu Trimellithsäureanhydrid 1:0,6 bis 1:1,1 vorzugsweise 1:0,8 bis 1:0,9 beträgt.

Außer Trimellithsäureanhydrid können auch andere Anhydride von Polycarbonsäuren wie Pyromellithsäureanhydrid oder Maleinsäureanhydridaddukte z.B. an Piperylen, für die Umwandlung der Hydroxylgruppen in Carboxylgruppen verwendet werden.

Als Verbindungen mit Hydroxylgruppen kommen zweckmäßigerweise solche in Frage, die Hydroxylzahlen im Bereich 10 bis 80, vorzugsweise von 15 bis 40 besitzen, im Zahlenmittel dampf-druck-osmometrisch bestimmte Molekulargewichte von 600 bis 10000, vorzugsweise von 2000 bis 8000 und Erweichungspunkte von 35 bis 110°C, vorzugsweise von 40 bis 90°C, bestimmt durch Differentialthermoanalyse, aufweisen. Genannt seien hier beispielsweise entsprechende Polyester, Polyether, Polythioether, Polyacetale, Polycarbonate, Polyesteramide, wobei die Polyester bevorzugt sind.

Solche Hydroxylgruppen tragenden Polyester sind z.B. Umsetzungsprodukte von mehrwertigen, vorzugsweise zweiwertigen und gegebenenfalls zusätzlich dreiwertigen Alkoholen, mit mehrwertigen, vorzugsweise zweiwertigen Carbonsäuren. Anstelle der freien Polycarbonsäuren können auch die entsprechenden Polycarbonsäureanhydride oder entsprechende Polycarbonsäureester von einwertigen Alkoholen mit 1 bis 6 C-Atomen oder deren Gemische zur Herstellung der Polyester verwendet werden. Die Reaktion kann auch in Gegenwart von üblichen Veresterungskatalysatoren durchgeführt werden. Die Polycarbonsäuren können aliphatischer, cycloaliphatischer, aromatischer und/oder heterocyclischer Natur sein und gegebenenfalls, z.B. durch Halogenatome, substituiert und/oder ungesättigt sein.

Als Beispiel für solche Carbonsäuren und deren Derivate seien genannt: Bernsteinsäure, Adipinsäure, Korksäure, Azelainsäure, Sebacinsäure, Phthalsäure, Isophthalsäure, Trimellithsäure, Phthalsäureanhydrid, Tetrahydrophthalsäureanhydrid, Hexahydrophthalsäureanhydrid, Tetrachlor phthalsäureanhydrid, Endomethylentetrahydrophthalsäureanhydrid, Glutarsäureanhydrid, Maleinsäure, Maleinsäureanhydrid, Fumarsäure,

dimerisierte und trimerisierte ungesättigte Fettsäuren, gegebenenfalls in Mischung mit monomeren ungesättigten Fettsäuren, wie Ölsäure; Terephthalsäuredimethylester und Terephthalsäure-bis-glykolester. Als mehrwertige Alkohole kommen z.B. Ethylenglykol, Propylenglykol-(1,2) und -(1,3), Butylenglykol-(1,4) und -(2,3), Hexandiol-(1,6), Octandiol-(1,8), Neopentylglykol, 1,4-Bis-hydroxymethylcyclohexan, 2-Methyl-1,3-propandiol, Glycerin, Trimethylolpropan, Hexantriol-(1,2,6), Butantriol-(1,2,4), Trimethylolethan, Pentaerythrit, Chinit, Mannit und Sorbit, Methylglykosid, ferner Diethylenglykol, Triethylenglykol, Tetraethylenglykol und höhere Polyethylenglykole, Dipropylenglykol und höhere Polypropylenglykole sowie Dibutylenglykol und höhere Polybutylenglykole in Frage. Die Polyester können an den Kettenenden im Durchschnitt 2 und mehr Carboxylgruppen tragen, die teilweise als Carbonsäureanhydridgruppen vorliegen. Auch Polyester aus Lactonen, z.B. ε-Caprolacton, oder aus Hydroxycarbonsäuren, z.B. ω-Hydroxycapronsäure, sind einsetzbar.

Bei einer besonders bevorzugten Ausführungsform des erfindungsgemäßen Bindemittels werden als Komponente I. Anhydrid-Umsetzungsprodukte von linearen, Hydroxylgruppen tragenden Polyestern eingesetzt, die mit Ethylenglykol im Überschuß als Veresterungsmittel unter destillativer Entfernung des überschüssigen Ethylenglykols erhalten worden sind. Solche Hydroxylgruppen tragenden Polyester haben Säurezahlen von unter 4, vorzugsweise unter 2.

Die Herstellung der anderen Hydroxylgruppen tragenden Verbindungen (Polyether, Polythioether, Polyacetale, Polycarbonate, Polyesteramide) ist bekannt und beispielsweise in der EP-Offenlegungsschrift 104424 beschrieben.

Die erfindungsgemäß als Komponente II eingesetzten 1,2-Epoxidverbindungen haben im Mittel mindestens zwei 1,2-Epoxidgruppen pro Molekül, stellen also Polyepoxidverbindungen dar, und haben einen Aufschmelzpunkt von über 40°C.

Die 1,2-Epoxidverbindungen können sowohl gesättigt als auch ungesättigt sowie aliphatisch, cycloaliphatisch, aromatisch und heterocyclisch sein und auch Hydroxylgruppen aufweisen. Sie können weiterhin solche Substituenten enthalten, die unter den Mischungs-oder Reaktionsbedingungen keine störenden Nebenreaktionen verursachen, beispielsweise Alkyl-oder Arylsubstituenten, Äthergruppierungen oder ähnliche.

Derartige Polyepoxidverbindungen sind solche auf Basis mehrwertiger Phenole, beispielsweise aus Resorcin, Hydrochinon, aus 4,4'-Dihydroxydiphenylmethan, aus Isomerengemischen des Dihydroxydiphenylmethans (Bisphenol F), aus 4,4'-Dihydroxy-3,3'-dimethyl-diphenylmethan, aus 4,4'-Dihydroxy-diphenyldimethylmethan (Bisphenol A), aus 4,4'-Dihydroxydiphenylmethylmethan, aus 4,4'-Dihydroxydiphenylcyclohexan, aus 4,4'-Dihydroxy-3,3'-dimethyldiphenylpropan, aus 4,4'-Dihydroxydiphenyl, aus 4,4'-Dihydroxydiphenylsulfon, aus Tris-(4hydroxyphenyl)-methan, aus 4,4'-Dihydroxybenzophenol, Bis-(4-hydroxyphenyl)-1,1-isobutan, Bis-(4-hydroxy-tert.-butylphenyl)-2,2-propan, Bis-(2-hydroxynaphthyl)-methan, 1,5-Dihydroxynaphthalin, Bis-(4-hydroxyphenyl-)ether; ferner aus den Chlorierungs-und Bromierungsprodukten der vorstehend genannten Verbindungen, aus Novolaken (d.h. aus Umsetzungsprodukten von ein-oder mehrwertigen Phenolen mit Aldehyden, insbesondere Formaldehyd in Gegenwart saurer Katalysatoren).

Auch die Polyclycidylether von mehrwertigen Alkoholen sind geeignet. Als Beispiele derartiger mehrwertiger Alkohole seien Trimethylolpropan und Bis-(4-hydroxycylohexyl)-2,2-propan genannt.

In Betracht zu ziehen sind auch mit Komponente I. verträgliche feste Acrylatharze, die Glycidylgruppen enthalten, z. B. geeignete Polymere auf Basis von Glycidylmethacrylat.

Weiter kommen Verbindungen wie (Poly)glycidylester der Formel

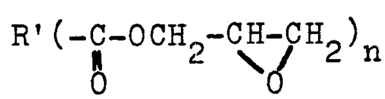

in Frage, in denen R' ein linearer oder verzweigter, gesättigter oder ungesättigter Kohlenwasserstoffrest mit bis zu 40, vorzugsweise bis zu 10 Kohlenstoffatomen oder ein gegebenenfalls substituierter Phenylrest ist und n mindestens 2, vorzugsweise 2 bis 5 bedeutet. Solche Polyglycidylester von Polycarbonsäuren erhält man durch die Umsetzung von Epichlorhydrin oder ähnlichen Epoxyverbindungen mit einer aliphatischen, cycloaliphatischen oder aromatischen Polycarbonsäure, wie

Oxalsäure, Adipinsäure, Glutarsäure, Terephthalsäure, Hexahydrophthalsäure, 2,6-Naphthalindicarbonsäure und dimerisierte Fettsäuren;

Beispiele sind Terephthalsäurediglycidylester und Hexahyrophthalsäurediglycidylester.

Ferner können als Polyepoxide Verbindungen wie Triglycidylisocyanurat und/oder dessen Oligomere und Triglycidylurazol sowie dessen Oligomere sowie Mischungen der genannten Stoffklassen eingesetzt werden.

Diese Polyepoxidverbindungen können auch in Mischung untereinander sowie ggfs. auch in Mischung mit Monoepoxiden eingesetzt werden, wobei zu beachten ist, daß die Mischung der 1,2-Epoxidverbindungen einem Aufschmelzpunkt von über 40°C besitzt. Verwendet man in der Mischung 1,2-Epoxid verbindungen mit niedrigen Aufschmelzpunkten, so können diese nur zu einem geringen Anteil und nur in Kombination mit entsprechend hochschmelzenden 1,2-Epoxidverbindungen eingesetzt werden, damit der Aufschmelzpunkt von Komponente II über 40°C beträgt.

Als Monoepoxide sind beispielsweise geeignet: epoxidierte einfach-ungesättigte Kohlenwasserstoffe (Butylen-, Cyclohexen-, Styroloxid), halogenhaltige Epoxide, wie z. B. Epichlorhydrin; Epoxidether einwertiger Alkohole (Methyl-, Ethyl-, Butyl-, 2-Ethylhexyl-, Dodecylalkohol); Epoxidether einwertiger Phenole (Phenol, Kresol sowie andere in o-oder p-Stellung substituierte Phenole); Glycidylester ungesättigter Carbonsäuren, epoxidierte Ester von ungesättigten Alkoholen bzw. ungesättigten Carbonsäuren sowie die Acetale des Glycidaldehyds.

Weitere Epoxidverbindungen mit geeigneten Aufschmelzpunkten sind in dem Handbuch "Epoxidverbindungen und Epoxidharze" von A.M. Paguin, Springer Verlag, Berlin 1958, Kapitel IV, in Lee, Neville "Handbook of Epoxy Resins", 1967, Chapter 2 und in Wagner/Sarx, "Lackkunstharze", Carl Hanser Verlag (1971), S. 174 ff beschrieben.

Bevorzugte Epoxyverbindungen sind:

-Poly-(Epoxyalkyl)-Äther aliphatischer oder cycloaliphatischer Polyhydroxyverbindungen, wie des Trimethyloläthans, Trimethylolpropans, Tris(hydroxyäthyl)-isocyanurats, Pentaerythrits;

-Umsetzungsprodukte von Epihalogenhydrinen, wie Epichlorhydrin mit monomeren mehrwertigen Phenolen wie 2,2-Bis(4-Hyroxyphenyl)-propan, 1,1-Bis(4-Hydroxyphenyl)-äthan, Bis(4-Hydroxyphenyl)-methan, 4,4'-Dihydroxydiphenylsulfon, Hydrochinon, Resorcin, Dihydroxydiphenyl, Dihydroxynaphthalin, ferner das Trisglycidylisocyanurat;

-Glycidyläther von mehrwertigen phenolischen Verbindungen wie Novolaken und Resolen, gewonnen aus der Kondensation des Phenols und/oder der Kresole mit Formaldehyd;

-Polyglycidylester von Polycarbonsäuren wie Diglycidylester der Phthalsäure, Isophthalsäure, Terephthalsäure, Tetrahydrophthalsäure, Hexahydrophthalsäure, aus Polyestern abgeleitete Polyglycidylester oder auch Verbindungen mit freien Carbonsäuregruppen.

Besonders bevorzugt werden Epoxidharze auf Basis von Bisphenol A und Epichlorhydrin mit Epoxidäquivalentgewichten im Bereich von 600 bis 1200, vorzugsweise 700 bis 900 verwendet.

Entscheidend für das erfindungsgemäße Bindemittel für Pulverlack ist der Zusatz einer polyfunktionellen hydroxylgruppenreaktiven Komponente III, die eine wesentliche Verbesserung der Lösungsmittelbeständigkeit des Pulverlacküberzuges bewirkt. Zweckmäßigerweise wird die Komponente III in stöchiometrischer Mischung mit dem Epoxidharz eingesetzt, bezogen auf die im Epoxidharz gegebenenfalls vorhandenen und/oder aus der Reaktion zwischen den Komponenten I und II gebildeten Hydroxylgruppen, wenn auch ein Überschuß an hydroxylgruppenreaktiver Komponente III zumeist nicht schädlich ist und bei Harnstoffstrukturen erzeugenden Vernetzern III zur Verstärkung des Matteffektes nötig sein kann.

Als hydroxylgruppenreaktive Verbindungen III mit einer Funktionalität $\geq 2$, vorzugsweise 2 bis 5, kommen in Frage polyfunktionelle ß-Hydroxyethylcarbonsäureester - erhalten beispielsweise durch Umsetzung von Polycarbonsäuren mit Epoxidverbindungen z.B. aus Trimellithsäure und Ethylen-oder Propylenoxid - Malonsäureester, blockierte Polyisocyanatverbindungen, ausgenommen carboxylgruppenhaltige Polyurethanpräpolymere, gebildet durch Reaktion von Polyisocyanaten, Hydroxycarbonsäuren und Verkappungsmitteln. Die Säurezahl der hydroxylgruppenreaktiven Verbindungen III liegt im allgemeinen unterhalb von 15, vorzugsweise unterhalb von 10 und insbesondere unterhalb von 7 und der Erweichungspunkt im Bereich von etwa 35 bis 110°C, vorzugsweise von etwa 40 bis 90°C, bestimmt durch Differentialthermoanalyse.

Als blockierte Polyisocyanate eignen sich die aus der Polyurethanchemie bekannten Verbindungen, wie blockierte Polyisocyanate auf Basis von aliphatischen, cycloaliphatischen oder aromatischen Polyisocyanaten oder entsprechenden Präpolymeren.

Beispiele für derartige Polyisocyanate sind die aliphatischen Trimethylen-, Tetramethylen-, Pentamthylen-, Hexamethylen-, 1,2-Propylen-, 1,2-Butylen-, 2,3-Butylen-, 1,3-Butylen-, Äthylidin-und Butylidindiisocyanate, 2,2,4-Trimethylhexamethylendiisocyanat, 1,12-Dodecandiisocyanat, Dicycloalkylendiisocyanate wie 1,3-Cyclopentan-, 1,4-Cyclopentan-und 1,2-, 1,3-und 1,4-Cyclohexandiisocyanate sowie Isophorondiisocyanat (IPDI), weiterhin Diisocyanate dimerer Säuren, die aromatischen Diisocyanate, wie 1,3-Phenylen-, 1,4-Phenylen-, 4,4'-Diphenyl-, 1,5-Naphthalin-und 1,4-Naphthalindiisocyanate, die aliphatisch-aromatischen Diisocyanate wie 4,4'-Diphenylenmethan, 2,4-,2,6-Toluylen-, 4,4'-Toluidin-und 1,4-Xylilendiisocyanate, die kernsubstituierten aromatischen Isocyanate wie Dianisidindiisocyanat, 4,4'-Diphenyletherdiisocyanat und Chlordiphenylendiisocyanat, Diphenylmethan-2,4'-und/oder -4,4'-diisocyanat, 3,2'-oder 3,4-Diisocyanato-4-methyldiphenylmethan, die Triisocyanate wie Triphenylmethan-4,4'-4"-Triisocyanat, 1,3,5-Benzoltriisocyanat und 2,4,6-Toluoltriisocyanat und die Tetraisocyanate, wie 4,4'-Diphenyldimethyldimethan-2,2'-5,5'-tetraisocyanat oder Gemische dieser Verbindungen.

Neben diesen einfachen Polyisocyanaten sind auch solche geeignet, die Heteroatome in dem die Isocyanatgruppen verknüpfenden Rest enthalten. Beispiele hierfür sind Carbodimidgruppen, Allophonatgruppen, Isocyanuratgruppen, Urethangruppen, acylierte Harnstoffgruppen und Biuretgruppen aufweisende Polyisocyanate.

Als Polyisocyanate können weiterhin die polymerisierten Polyisocyanate, wie das Dimere von Tolylendiisocyanat, isocyanurathaltiges Polyisocyanat aus 3-Isocyanatomethyl-3,3,5-trimethyl-cyclohexylisocyanat und dergleichen, oder auch trimerisierte Isocyanate, wie sie etwa in der DE-Patentschrift 951 168 beschrieben sind, eingesetzt werden.

Geeignete Polyisocyanate sind schließlich auch die bekannten, endständigen Isocyanatgruppen aufweisenden Präpolymere, wie sie insbesondere durch Umsetzung der obengenannten einfachen Polyisocyanate, vor allem Diisocyanate mit unterschüssigen Mengen an organischen Verbindungen mit mindestens zwei gegenüber Isocyanatgruppen reaktionsfähigen Gruppen oder Wasser zugänglich sind. Beispielsweise seien hier die Umsetzungsprodukte aus 1 Mol Trimethylolpropan oder Trimethyloläthan mit 3 Mol Toluylendiisocyanat genannt; bei deren Herstellung wird das überschüssig angewandte Toluylen-diisocyanat nach der Umsetzung der Hydrolylgruppen destillativ entfernt. Weiterhin kommt hier auch ein Umsetzungsprodukt aus 1 Mol Wasser und 3 Mol Hexamethylendiisocyanat in Frage.

Zur Reaktion mit den Polyisocyanaten sind auch Verbindungen des Molekulargewichtsbereiches von 300 bis 10 000, vorzugsweise von 400 bis 6000, die insgesamt mindestens zwei Aminogruppen und/oder Hydroxylgruppen aufweisen, geeignet. Bevorzugt sind hierbei die entsprechenden Polyhydroxyverbindungen, z. B. die in der Polyurethanchemie an sich bekannten Hydroxypolyester, Hydroxypolyether und/oder hydroxylgruppenhaltige Acrylatharze.

In diesen bekannten Präpolymeren entspricht das Verhältnis von Isocyanatgruppen zu gegenüber NCOreaktiven Wasserstoffatomen 1,05 bis 10 : 1, vorzugsweise 1,1 bis 3 : 1, wobei die Wasserstoffatome vorzugsweise aus Hydroxylgruppen stammen.

Die Art und Mengenverhältnisse der bei der Herstellung der NCO-Präpolymeren eingesetzten Ausgangsmaterialien werden im übrigen vorzugsweise so gewählt, daß die NCO-Präpolymeren a) eine mittlere NCO-Funktionalität von 2 bis 5, vorzugsweise von 3 bis 4 und b) ein mittleres Molekulargewicht von 500 bis 10 000, vorzugsweise von 800 bis 4 000 aufweisen und c) Säurezahlen unterhalb von 15, vorzugsweise unterhalb von 10 und insbesondere unterhalb von 7 besitzen.

Als Blockierungsmittel eignen sich aliphatische, cycloaliphatische oder alkylaromatische (einwertige) Alkohole z. B. niedere aliphatische Alkohole wie Methyl-oder Ethylalkohol, die verschiedenen Propyl-, Butyl- oder Hexylalkohole, Heptyl-, Octyl-, Nonyl-oder Decylalkohol und ähnliche, ferner ungesättigte Alkohole wie Allylalkohole, cycloaliphatische Alkohole wie Cyclopentanol, Cyclohexanol, alkylaromatische Alkohole wie Benzylalkohol, Methyl-sowie p-Methoxy-und p-Nitrobenzylalkohol und Monoäther von Glykolen wie Ethylenglykolmonoäthyläther, -monobutyläther und ähnliche. Weitere Verkappungsmittel sind Ketoxime wie Methylethylketoxim, Acetonoxim, sowie längerkettige Oxime mit vorzugsweise bis zu 10 C-Atomen, wie Methyl, n-Amylketoxim und Dibutylketoxim, weiterhin Cyclohexanonoxim, CH-acide Verbindungen wie Malonsäurealkylester, Acetessigester sowie Cyanessigester mit jeweils 1 bis 4 C-Atomen in der Estergruppe, NH-acide Verbindungen wie Caprolactam, Aminoalkohole wie Diäthyläthanolamin. Als Blockierungsmittel bevorzugt wird $\epsilon$-Caprolactan (vgl. "Methoden der Organischen Chemie" (Houben-Weyl), Bd. 14/2, 4. Auflage, Georg Thieme Verlag, Stuttgart 1963, S. 61 ff).

Bei der Vernetzungsreaktion mit Hydroxylgruppen bilden blockierte Polyisocyanate Urethanbindungen.

Selbstverständlich können auch Gemische der oben erläuterten verschiedenen Typen von hydroxylgruppenreaktiven Verbindungen III eingesetzt werden.

Bevorzugt eingesetzt werden Bindemittelgemische mit solchen polyfunktionellen Vernetzern, die unter Härtungsbedingungen mit Carboxylgruppen und Carbonsäureamidgruppen Harnstoffstrukturen erzeugen. Auf diese Weise gelingt es, mit den erfindungsgemäßen Bindemitteln nicht nur die Lösungsmittelbeständigkeit zu verbessern, sondern auch matte Pulverlacküberzüge zu erhalten. Solche bevorzugten Vernetzer III sind Polyisocyanate wie Toluylendiisocyanate, Diphenylmethandiisocyanate, die mit Lactamen oder Oximen blockiert sind. Besonders gute Lösungsmittelbeständigkeit des Pulverlacküberzuges erreicht man, wenn das blockierte Polyisocyanat mehr als 2 Isocyanatgruppen enthält z.B. $C_6H_4(NCO).CH_2$ $[C_6H_3(NCO).CH_2]_{1-5}$ • $C_6H_4(NCO)$ oder Umsetzungsprodukte, bei denen die NCO-Gruppen des Toluylendiisocyanats (TDI) partiell mit Polyolen umgesetzt und die restlichen freien NCO-Gruppen, wie oben beschrieben, verkappt sind. Das heißt, als Vernetzer III werden bevorzugt blockierte Diphenylenme-

thandiisocyanate (MDIs = Methylene diphenyldiisocyanate) eingesetzt mit einem hohen Anteil an höherfunktioniellen Isocyanaten wie aromatischen Tri-und Tetraisocyanaten oder blockierte Umsetzungsprodukte von TDI mit Polyolen wie Trimethylolpropan, -äthan, Glycerin, Pentaerythrit oder blockierte TDI-Umsetzungsprodukte von Polyetherpolyolen oder Polyesterpolyolen mit Säurezahlen von kleiner als 15, vorzugsweise kleiner als 10 und insbesondere kleiner als 7, die ohne Verwendung von Hydroxycarbonsäuren hergestellt wurden und deren NCO-Präpolymeren eine mittlere NCO-Funktionalität von 3 - 4 besitzen.

Zur Verstärkung des Mattierungseffektes kann dem erfindungsgemäßen Bindemittel noch 0,1 bis 15 Gew.-%, vorzugsweise 2-12 % eines Polyamids, bezogen auf die gesamte Harzmischung (= Komponente I bis III), zugesetzt werden. Das eingesetzte Polyamid sollte sich bei 130 - 250°C, vorzugsweise bei 180 - 220°C in der Schmelze des Polyesters I homogen verteilen lassen.

Weniger geeignet hierfür sind Polyamide mit Schmelzpunkten über 250°C wie Polyamid 4/4, Polyamid 6/6. Besser gelingt die homogene Verteilung bei Polyamiden mit Schmelzpunkten unter 180°C oder bei Mischpolyamiden, bei denen der Anteil an kristallinen Bereichen reduziert ist. Beispiele für geeignete Polyamide sind Polyamid 12 (z. B. das Handelsprodukt (R)Westamid L 1200 der Fa. Hüls mit einem Schmelzpunkt von 172 bis 180°C) oder Mischpolyamide auf Basis Polyamid 6 und Polyamid 6/6 (z. B. das Handelsprodukt C 35 der Fa. BASF mit 85 % Polyamid 6 und 15 % Polyamid 6/6 und einem Schmelzpunkt 220 bis 250°C).

Bei der Auswahl der vernetzend wirkenden polyfunktionellen hydroxylgruppenreaktiven Verbindungen III muß deren Reaktivität auf die Vernetzungsreaktion zwischen den Carboxylgruppen der Komponente I und den Epoxidgruppen von der Komponente II abgestimmt werden. Wird z.B. die Gelierungszeit (sogenannte B-Zeit) der Polyester-Epoxidharzmischung bei 180° durch einen Katalysatorzusatz auf 150 bis 300 Sekunden eingestellt, sollte eine solche Komponente III ausgewählt werden, die in Kombination mit einer Hydroxylgruppen tragenden Epoxidverbindung II oder einem Hydroxylgruppen enthaltenen Reaktionsprodukt der Komponenten I und II B-Zeiten von weniger als 400 Sekunden, vorzugsweise weniger als 200 Sekunden aufweist. Besonders geeignete Vernetzer, die diese Bedingung erfüllen und die gleichzeitig mit Carboxylgruppen Harnstoffgruppierungen ergeben, sind Caprolactam blockierte aromatische Polyisocyanate.

Als Komponente IV können die auf dem Lacksektor üblichen Zusatzstoffe verwendet werden, wie Verlaufmittel, Farbstoffe, Pigmente, Füllstoffe, Stabilisatoren und Katalysatoren zur Beschleunigung der Vernetzungsreaktionen.

Für eine beschleunigte Reaktion zwischen den Carboxylgruppen der Komponente I und den Epoxidgruppen der Komponente II kommen als Katalysatoren beispielsweise in Betracht: Zinknaphthenat und -octoat, Zinnoctoat, Dibutylzinndilaurat, Lithiumbenzoat und -hydroxyd, Zinn-und Zinkchlorid, Titan-, Vanadin-und Zirkonalkoholate, Metallsalze von organischen Carbonsäuren, quaternäre Ammonium-und Phosphoniumsalze, Salze der Phosphorsäure, Amine und Amidine, substituierte und nicht substituierte Harnstoffe und Polyharnstoffe, Pyrazolone, Pyrimidine, Imidazol und dessen Derivate. Diese Katalysatoren werden dabei in Mengen von 0,05 bis 5, vorzugsweise 0,1 bis 2 Gew.-%, bezogen auf den Polyester I, eingesetzt.

Verlaufsmittel auf Basis von handelsüblichen Acrylatoligomeren können im Bereich von 0,2 - 2 Gew.-%, vorzugsweise 0,4 - 0,9 Gew.-%, bezogen auf das Gesamtpulverlackbindemittel (= Komponente I bis III) zugesetzt werden.

Stabilisatoren sind z. B. aromatische Diketone wie Benzoin, die punktuelle Zersetzungen unterbinden und damit die Porenbildung herabdrücken. Diese werden im allgemeinen in Mengen von 0,1 bis 3, vorzugsweise von 0,2 bis 2 Gew.-%, bezogen auf das gesamte Bindemittel, eingesetzt.

Als Farbstoffe bzw. Pigmente, die anorganischer oder organischer Natur sein können, seien beispielsweise Titandioxid und Zinkoxid genannt. Die organischen Farbstoffe/Pigmente sind naturgemäß so auszuwählen, daß sie bei den Härtungstemperaturen stabil sind und zu keinen untolerierbaren Farbtonverschiebungen führen.

Geeignete Füllstoffe sind z. B. Quarzmehl, Silikate oder dergleichen.

Die erfindungsgemäß zu verwendenden Komponenten I, II und III sowie gegebenenfalls IV werden zunächst gemischt und in der Schmelze homogenisiert. Dies kann in geeigneten Aggregaten, z.B. beheizbaren Knetern, Doppel-Z-Mischern, Extrudern, vorzugsweise durch letztere, erfolgen, wobei die Extrusionstemperatur so zu wählen ist, daß ein Maximum an Scherkraft auf die Mischung einwirkt. Dabei sollte eine Temperaturobergrenze von 140°C nicht überschritten werden. Bei der Mitverwendung von Polyamiden kann es zweckmäßig sein, zunächst nur den Polyester I mit dem Polyamid in der Schmelze bei höheren

Temperaturen wie 150 bis 250°C, vorzugsweise 180 bis 220°C, zu homogenisieren und erst dann bei der tieferen Temperatur die weitere Homogensierung der anderen Komponenten vorzunehmen. Ebenfalls kann es bei Einsatz von Katalysatoren zweckmäßig sein, diese der Komponente I oder II zuzusetzen. Dies kann beispielsweise auch bei der Herstellung der Komponente I erfolgen.

Die homogenisierte Masse wird nach Abkühlen auf Raumtemperatur und nach einer geeigneten Vorzerkleinerung zu einem Pulverlack gemahlen, wobei je nach dem Verwendungszweck mittlere Teilchengrößen von ca. 40 bis 90 µm, vorzugsweise jedoch ca. 50 µm, angestrebt werden. Ein eventuell vorhandener Grobkornanteil von Teilchengröße von mehr als 90 µm wird durch Absieben entfernt.

Das Auftragen der so hergestellten Pulverlacke auf geeignete Substrate, wie z. B. Metall, Holz, Glas, Beton, Kunststoff, Keramik etc., kann nach den bekannten Verfahren, z.B. durch elektrostatisches Pulversprühen, Wirbelsintern, elektrostatisches Wirbelsintern sowie im Flammsprühverfahren erfolgen.

Nach dem Auftragen des Pulverlackes nach einem der genannten Verfahren werden die beschichteten Werkstücke zur Aushärtung auf eine Temperatur von 140 bis 220°C, vorzugsweise 160 bis 210°C, für eine zum Aushärten ausreichende Zeit, im allgemeinen 10 bis 60 Minuten, erhitzt. Die so erhaltenen Beschichtungen zeichnen sich durch gute lacktechnische Eigenschaften, wie gute mechanische Eigenschaften, gute chemische Beständigkeit, gute Wetterbeständigkeit, gute Haftung etc. aus. Die erfindungsgemäßen Pulverlacke eignen sich daher insbesondere zum Beschichten von hitzebeständigen Materialien, wie z. B. Metall, Glas und Keramik.

In den nachfolgenden Beispielen sind T Gewichtsteile und % Gewichtsprozent.

## BEISPIELE

1. Herstellung der Polyester mit Hydroxylgruppen

1.1. In einem Reaktionsgefäß mit einer Destillationskolonne wird eine Mischung aus 7,5 Mol Terephthalsäure, 2 Mol Adipinsäure, 0,5 Mol Iso-Phthalsäure und 30 Mol Ethylenglykol bei steigender Guttemperatur (170 bis 240°C) unter Normaldruck bis zu einer Säurezahl unter 0,3 verestert. Dabei wird darauf geachtet, daß die Temperatur am Kolonnenkopf besonders in der ersten Veresterungsphase nicht über 140°C steigt. Nachdem die geforderte niedrige Säurezahl nach 45 Stunden erreicht ist, destilliert man den Ethylenglykolüberschuß zunächst unter Normaldruck bis zu einer Guttemperatur bis zu 200° ab, vermindert dann den Druck bei dieser Temperatur bis 1,3 mbar, steigert dann nach 2 Stunden bei 200° unter 1,3 mbar auf 230°C, die 1,5 Stunden unter 1,3 mbar gehalten werden. Die Schmelze wird während des Abkühlens bei 155°C trüb (= Trübungstemperatur). Das erhaltene Produkt besitzt eine Hydroxylzahl von 34 mg KOH/g und eine Säurezahl von 1,9 mg KOH/g.

1.2 Das Herstellungsverfahren von Beispiel 1.1 wird wiederholt, jedoch werden bei Beginn der Veresterung 0,03 Gew.-% Dibutyl-Zinnoxid, bezogen auf die eingesetzte Säure-Glykol-Mischung, zugegeben. Die Veresterungszeit bis zum Erreichen einer Säurezahl unter 0,3 verkürzt sich dadurch auf 30 Stunden.

2. Herstellung der Polyester mit Carboxylgruppen.

2.1 Zu 1016 T der 170° heißen Schmelze des nach 1.1 erhaltenen Polyesters gibt man unter Rühren 104,9 T Trimellithsäureanhydrid. Die Schmelze wird 4,5 Stunden bei 170°C, 4,5 Stunden bei 180°, 3,5 Stunden bei 190° gehalten und mit einem üblichen Katalysator zur Beschleunigung der Reaktion zwischen Carboxyl-und Epoxygruppen versetzt. Nach schneller Abkühlung des geschmolzenen Polyesters erhält man ein Produkt mit einer Säurezahl, mit Wasser bestimmt, von 58,3 und eine Säurezahl, mit Alkohol bestimmt, von 49,8. Danach liegen 29,4 % der in Gegenwart von Wasser bestimmten Carbonsäuren als Carbonsäureanhydridgruppen vor. Nach Auswertung des 59,1 ppm-Signals der $^{13}C$-NMR-Spektren vom Hydroxylgruppen tragenden Ausgangspolyester im Vergleich zu dessen Trimellithsäureanhydrid-Umsetzungsprodukt sind über 90 % der ursprünglich vorhandenen Hydroxylgruppen umgesetzt. Die gelchromatographische Bestimmung der niedermolekularen Anteile, die kleinere durchschnittliche Molekulargewichte als 300 besitzen, ergibt, daß der Gehalt an nichtgebundenem Trimellithsäureanhydrid im erhaltenen Polyester unter 0,02 Gew.-% liegt. Die 30 Gew.-%ige Lösung des Polyesters in Dichloressigsäure ist hellgelb gefärbt und klar.

2.2. Das Herstellungsverfahren von Beispiel 2.1 wird wiederholt, nach der Haltezeit von 3,5 Stunden bei 190°C gibt man unter Rühren 112 T eines Mischpolyamids mit 85 % Polyamid 6 und 15 % Polyamid 6/6 (Handelsprodukt C 35 von BASF) zur Polyesterschmelze, hält bei dieser Temperatur noch 1 Stunde und fügt dann erst den Katalysator gemäß Beispiel 2.1. hinzu.

Analytische Bestimmungsmethoden

Säurezahlbestimmung mit Wasser: ca. 5 g der dem Reaktionsgefäß entnommenen Polyesterprobe und 25 ml Diglykoldimethylether (Siedepunkt 156°C) werden durch Erwärmen gelöst. Beim Abkühlen gibt man 25 ml Ethylenglykoldimethylether (Siedepunkt ca. 60°C) und 10 ml Wasser hinzu und kocht 1 Stunde am Rückfluß. Dann werden 100 ml Diglykoldimethylether zugegeben und mit methanolischer 0,1 normaler NaOH bei Raumtemperatur titriert, Indikator: Phenolphthalein.

Säurezahlbestimmung mit Alkohol: Ca. 5 g Polyester werden mit 25 ml Diglykoldimethylether heiß gelöst und beim Abkühlen 25 ml Butanol zugegeben. Nach einstündigem Kochen am Rückfluß wird mit 75 ml Diglykoldimethylether unter Abkühlen auf Raumtemperatur verdünnt und mit methanolischer 0,1 normaler Natronlauge titriert, Indikator: Phenolphthalein.

Anhydridgruppengehalt: Den Anhydridgruppengehalt errechnet man aus den mit Wasser und Alkohol bestimmten Säurezahlen. Hydroxylgruppengehalt: Der Hydroxylgruppengehalt des Polyesters bei OH-Zahlen über 10 wird wie üblich mit Essigsäureanhydrid/Pyridin bestimmt.

3. Prüfung der erfindungsgemäßen Bindemittel für Pulverlacke:

Zur Einstellung bzw. Bestimmung der Reaktionsgeschwindigkeit zwischen den Carboxylgruppen der Komponente I und den Epoxidgruppen der Komponente II wird die Gelierungszeit, B-Zeit genannt, gemessen.

Gelierungszeit (B-Zeit):

Der zu untersuchende Polyester wird gemeinsam mit Beckopox VEP 2303* im Gewichtsverhältnis 7:3 gemahlen und die erhaltene Pulvermischung in einer Vertiefung der Heizplatte mit einer Geschwindigkeit von 10°C pro Minute aufgeheizt, bis die Schmelze bei der Behandlung mit einem Glasstab Fäden zieht.

Tabelle 1 Gelierungszeiten (B-Zeiten) von Beckopox VEP 2303-Polyester-Kombinationen

| Polyester | 1,2-Epoxid-verbindung | B-Zeit, gemessen bei 180°C in Sekunden |
|---|---|---|
| 70 T hergest. nach Bsp. 2.1 | 30 T Beckopox VEP 2303 | 230 |
| 70 T " " " 2.2 | 30 T " " " | 210 |

*) Beckopox VEP 2303 der Fa. Hoechst AG (Epoxidharz auf Basis Bisphenol A und Epichlorhydrin mit einem Epoxid-Äquivalentgewicht 750-830, Viskosität, gemessen 40 % bei 25°C in Butyldiglykol, 450-550 mPa.s)

Tabelle 2 Gelierungszeiten (B-Zeiten) in Sekunden von Beckopox VEP 2303-Kombinationen mit OHreaktiven Vernetzern

OH-reaktive Vernetzer:

III 1) Verzweigter Polyester mit OH-Gruppen, partiell umgesetzt mit Toluylendiisocyanat/ε-Caprolactam-verkappt, SZ (DIN 53 402) ca 5 mg KOH/g, verkappte NCO ca. 9,5 %, freie NCO 0,5 %, FP (Kapillarverf., DIN 53 736) 80°C
III 2) Diphenylmethandiisocyanat/ε-Caprolactam-verkappt, enthaltend höhermolekulare Anteile, verkappte NCO ca. 16,5 %, freie NCO ≤ 0,5 %, FP 75-90°C
III 3) Isophorondiisocyanat/ε-Caprolactam-verkappt, verkappte NCO ca. 13,5 %, freie NCO 0,5 %, FP 90-100°C
III 4) verzweigter Polyester mit OH-Gruppen, partiell umgesetzt mit Isophorondiisocyanat/ε-Caprolactam-verkappt, SZ ca. 5 mg KOH/g, verkappte NCO ca. 9,5 %, freie NCO 0,5 %, FP ca. 75°C.

| OH-reaktiver Vernetzer Art | Menge in Gew.-Teilen auf 1 Gew.-Teil Epoxidharz | B-Zeiten [s] bei 160°C | 180°C | 200°C |
|---|---|---|---|---|
| III 1) | 0,90 | 300 | 120 | 45 |
| III 2) | 0,518 | 320 | 95 | 45 |
| III 3) | 0,634 | | 555 | 240 |
| III 4) | 0,90 | über 600 | 325 | 150 |

Die Bindemittel für Pulverlacke gemäß der Erfindung können in Bezug auf das Fließvermögen vor und während der Vernetzung und in Bezug auf die Farbe, Oberflächenbeschaffenheit, Löslichkeit des Lacküberzuges nach der Vernetzung durch den Fließtest beurteilt werden.

Hierzu wird die gemahlene Pulvermischung zu einer Tablette gepreßt und auf einer waagrecht gelagerten Glasplatte bei der vorgesehenen Testtemperatur in 5 Minuten zum Schmelzen gebracht. Dann wird die Glasplatte bis zu einem Winkel von 45° geneigt und in dieser Position bei der Testtemperatur 5 Minuten gehalten. Der die Glasplatte heruntergelaufene Tropfen der geschmolzenen Harzmischung wird beurteilt in Bezug auf die geflossene Strecke, gemessen in Zentimeter, die Löslichkeit in Butylacetat (der mit Butylacetat getränkte Wattebausch wird auf das Harz gelegt bis Weichwerden erfolgt), Aussehen (klare Durchsicht = D 1, starke Trübung = D 5), Farbe (F 1 = farblos, F 5 = braun) und Oberflächenbeschaffenheit (glänzende Oberfläche = G 1, matte Oberfläche = G 5). Die Ergebnisse sind in Tabelle 3 zusammengestellt.

Tabelle 3 Polyester mit COOH-Endgruppen, vernetzt durch Epoxidharz unter Zusatz von OH-reaktiven polyfunktionellen Verbindungen

| Bsp.-Nr. | eingesetzt, g | | | Gelierzeit | | Fließtest auf Glas | | | | Bemerkungen |
|---|---|---|---|---|---|---|---|---|---|---|
| | Polyester I nach Beispiel T | Epoxidharz II T | OH-reaktiv Verb.III T | °C | s | °C | Fließstrecke cm | Aussehen | Löslichkeit min | |
| 1 | 70 nach 2.1 | 30 VEP 2303 | 15 Verb.2), Tab.2 | 180 | 120 | 180 | 4,4 | D 4/F 3/G4 | 4 | erfindungsgemäße Bindemittel |
| 2 | 70 nach 2.2 | 30 " " | 15 " " | 180 | 105 | 180 | 3,9 | D 4/F 3/G4 | 4 | |
| 3 | 70 nach 2.1 | 30 " " | 30 Verb.1), Tab.2 | 180 | 120 | 180 | 4,4 | D 5/F 3/G5 | 1-2 | " |
| 4 | 70 nach 2.2 | 30 " " | 30 " " | 180 | 110 | 180 | 4,3 | D 5/F 3/G5 | 1-2 | |
| A | 70 nach 2.1 | 30 " " | - | 180 | 275 | 180 | 6,6 | D 1/F 2/G1 | 1 | Vergleichsversuche |
| B | 70 nach 2.2 | 30 " " | - | 180 | 240 | 180 | 6,0 | D 1/F 2/G1 | 1 | |

## Ansprüche

1. Bindemittel für Pulverlacke auf Basis von
I. 40 bis 80 Gew.-% Carboxylgruppen tragenden Verbindungen mit Säurezahlen im Bereich von 15 - 150 mg KOH/g,
II. 15 bis 40 Gew.-% 1,2-Epoxidverbindungen mit mindestens zwei 1,2-Epoxidgruppen pro Molekül und einem Aufschmelzpunkt von über 40°C, mit Epoxidäquivalentgewichten im Bereich von 600-1200,
III. 5 bis 30 Gew.-% hydroxylgruppenreaktiven Verbindungen mit einer Funktionalität ≥ 2 - ausgenommen carboxylgruppenhaltige Polyurethanpräpolymere, gebildet durch Reaktion von Polyisocyanaten, Hydroxycarbonsäuren und Verkappungsmitteln, - und gegebenenfalls
IV. üblichen Zusatzmitteln,
wobei die Summe der Komponenten I bis III stets 100 % ergibt.

2. Bindemittel nach Anspruch 1, dadurch gekennzeichnet, daß als Komponente I Polyester eingesetzt werden, die Säurezahlen im Bereich von 30 bis 70 mg KOH/g aufweisen und daß die Komponente II aus Epoxidharzen auf Basis von Polyphenolen und Epichlorhydrin besteht, deren Epoxidäquivalentgewichte im Bereich von 700 bis 900 liegen.

3. Bindemittel nach Anspruch 1 und/oder 2, dadurch gekennzeichnet, daß 55 bis 70 Gew.-% der Komponente I, 20 bis 30 Gew.-% der Komponente II und 8 bis 25 Gew.-% der Komponente III vorliegen.

4. Bindemittel nach einem oder mehreren der Ansprüche 1 bis 3, dadurch gekennzeichnet, daß die Endgruppen des Polyesters I zu über 70 %, vorzugsweise zu über 90 %, aus Carboxyl-und/oder Carbonsäureanhydridgruppen bestehen.

5. Bindemittel nach einem oder mehreren der Ansprüche 1 bis 4, dadurch gekennzeichnet, daß die Kettenenden des Polyesters I durchschnittlich 2 und mehr Carboxylgruppen, teilweise als Carbonsäureanhydridgruppen vorliegend, aufweisen.

6. Bindemittel nach einem oder mehreren der Ansprüche 1 bis 5, dadurch gekennzeichnet, daß die hydroxylgruppenreaktive polyfunktionelle Verbindung III ein blockiertes Polyisocyanat ist, das bei der Vernetzungsreaktion mit Hydroxylgruppen Urethanbindungen und mit Carboxylgruppen und Carbonsäureamidgruppen Harnstoffstrukturen erzeugt.

7. Bindemittel nach einem oder mehreren der Ansprüche 1 bis 6, dadurch gekennzeichnet, daß die hydroxylgruppenreaktive polyfunktionelle Verbindung III in Kombination mit dem Epoxidharz in stöchiometrischer Mischung, bezogen auf die im Epoxidharz vorhandenen und/oder in dem Reaktionsprodukt aus den Komponenten I und II gebildeten Hydroxylgruppen, vorliegt.

8. Bindemittel nach einem oder mehreren der Ansprüche 1 bis 7, dadurch gekennzeichnet, daß die hydroxylgruppenreaktive polyfunktionelle Verbindung III ein $\epsilon$-Caprolactamblockiertes aromatisches Polyisocyanat ist.

9. Bindemittel nach einem oder mehreren der Ansprüche 1 bis 8, dadurch gekennzeichnet, daß das Bindemittelgemisch 0,1 bis 15 Gew.-%, vorzugsweise 2 bis 12 Gew.-%, bezogen auf die gesamte Harzmischung, eines Polyamids enthält.

10. Verwendung der Bindemittel nach einem oder mehreren der Ansprüche 1 bis 9, gegebenenfalls zusammen mit weiteren üblichen Zusätzen, als Pulverlack zur Herstellung von lösungsmittelbeständigen Beschichtungen.

11. Verwendung nach Anspruch 10 zur Herstellung von matten Überzügen.

Patentansprüche für folgenden Vertragsstaat: AT

1. Härtbare Mischung auf Basis von
I. 40 bis 80 Gew.-% Carboxylgruppen tragenden Verbindungen mit Säurezahlen im Bereich von 15 - 150 mg KOH/g,
II. 15 bis 40 Gew.-% 1,2-Epoxidverbindungen mit mindestens zwei 1,2-Epoxidgruppen pro Molekül und einem Aufschmelzpunkt von über 40°C, mit Epoxidäquivalentgewichten im Bereich von 600-1200,
III. 5 bis 30 Gew.-% hydroxylgruppenreaktiven Verbindungen mit einer Funktionalität ≥2 - ausgenommen carboxylgruppenhaltige Polyurethanpräpolymere, gebildet durch Reaktion von Polyisocyanaten, Hydroxycarbonsäuren und Verkappungsmitteln, - und gegebenenfalls
IV. üblichen Zusatzmitteln,
wobei die Summe der Komponenten I bis III stets 100 % ergibt.

2. Härtbare Mischung nach Anspruch 1, dadurch gekennzeichnet, daß als Komponente I Polyester eingesetzt werden, die Säurezahlen im Bereich von 30 bis 70 mg KOH/g aufweisen und daß die Komponente II aus Epoxidharzen auf Basis von Polyphenolen und Epichlorhydrin besteht, deren Epoxidäquivalentgewichte im Bereich von 700 bis 900 liegen.

3. Härtbare Mischung nach Anspruch 1 und/oder 2, dadurch gekennzeichnet, daß 55 bis 70 Gew.-% der Komponente I, 20 bis 30 Gew.-% der Komponente II und 8 bis 25 Gew.-% der Komponente III vorliegen.

4. Härtbare Mischung nach einem oder mehreren der Ansprüche 1 bis 3, dadurch gekennzeichnet, daß die Endgruppen des Polyesters I zu über 70 %, vorzugsweise zu über 90 %, aus Carboxyl-und/oder Carbonsäureanhydridgruppen bestehen.

5. Härtbare Mischung nach einem oder mehreren der Ansprüche 1 bis 4, dadurch gekennzeichnet, daß die Kettenenden des Polyesters I durchschnittlich 2 und mehr Carboxylgruppen, teilweise als Carbonsäureanhydridgruppen vorliegend, aufweisen.

6. Härtbare Mischung nach einem oder mehreren der Ansprüche 1 bis 5, dadurch gekennzeichnet, daß die hydroxylgruppenreaktive polyfunktionelle Verbindung III ein blockiertes Polyisocyanat ist, das bei der Vernetzungsreaktion mit Hydroxylgruppen Urethanbindungen und mit Carboxylgruppen und Carbonsäureamidgruppen Harnstoffstrukturen erzeugt.

7. Härtbare Mischungen nach einem oder mehreren der Ansprüche 1 bis 6, dadurch gekennzeichnet, daß die hydroxylgruppenreaktive polyfunktionelle Verbindung III in Kombination mit dem Epoxidharz in stöchiometrischer Mischung, bezogen auf die im Epoxidharz vorhandenen und/oder in dem Reaktionsprodukt aus den Komponenten I und II gebildeten Hydroxylgruppen, vorliegt.

8. Härtbare Mischung nach einem oder mehreren der Ansprüche 1 bis 7, dadurch gekennzeichnet, daß die hydroxylgruppenreaktive polyfunktionelle Verbindung III ein $\varepsilon$-Caprolactamblockiertes aromatisches Polyisocyanat ist.

9. Härtbare Mischung nach einem oder mehreren der Ansprüche 1 bis 8, dadurch gekennzeichnet, daß das Bindemittelgemisch 0,1 bis 15 Gew.-%, vorzugsweise 2 bis 12 Gew.-%, bezogen auf die gesamte Harzmischung, eines Polyamids enthält.

10. Verfahren zur Herstellung der härtbaren Mischungen nach einem oder mehreren der Ansprüche 1 bis 9 durch Vermischen der Komponenten I bis III sowie gegebenenfalls IV, anschließendes Homogenisieren der Mischung unter Bedingungen, bei denen noch keine Reaktion der Komponenten untereinander erfolgt, und darauf folgendes Zerkleinern der homogenisierten Mischung.

11. Verwendung der härtbaren Mischung nach einem oder mehreren der Ansprüche 1 bis 9 sowie der härtbaren Mischungen, erhalten nach Anspruch 10, gegebenenfalls zusammen mit weiteren üblichen Zusätzen, als Pulverlack zur Herstellung von lösungsmittelbeständigen Beschichtungen.

12. Verwendung nach Anspruch 1 zur Herstellung von matten Überzügen.